# EUROPÄISCHE PATENTSCHRIFT

(11) **EP 1 301 066 B1**
(45) Veröffentlichungstag und Bekanntmachung des Hinweises auf die Patenterteilung: **08.06.2005**
(21) Anmeldenummer: 01967107.2
(22) Anmeldetag: 29.06.2001
(51) Int. Cl.: A01J 5/007, A01J 5/14

(54) **VERFAHREN UND VORRICHTUNG ZUR STEUERUNG UND ÜBERWACHUNG EINER SAUGMELKANLAGE**
METHOD AND DEVICE FOR CONTROLLING AND MONITORING A SUCTION-OPERATED MILKING INSTALLATION
PROCEDE ET DISPOSITIF DE COMMANDE ET DE CONTROLE D'UNE MACHINE A TRAIRE

(30) Priorität: 18.07.2000 DE 10034892
(43) Veröffentlichungstag der Anmeldung: 16.04.2003
(73) Patentinhaber: WestfaliaSurge GmbH, 59302 Oelde (DE)
(72) Erfinder: KAEVER, Peter, 59302 Oelde (DE)
(74) Vertreter: Neumann, Ditmar
(86) Internationale Anmeldenummer: PCT/EP2001/007433
(87) Internationale Veröffentlichungsnummer: WO 2002/005629

(56) Entgegenhaltungen:
- EP-A- 0 954 962
- US-A- 5 979 358

## Beschreibung

Die Erfindung betrifft ein Verfahren sowie eine Vorrichtung zum Steuern und Überwachen einer Sauganlage, bei welcher ein pulsierender Unterdruck mit abwechselnd aufeinanderfolgenden Saugphasen und Entlastungsphasen in einem Melkbecher eines Melkzeuges erzeugt wird, um ein automatisches Melken von Tieren zu ermöglichen.

Bei derartigen Anlagen wird nach Durchführen einer sogenannten Stimulationsphase ein gleichmäßig pulsierender Saugunterdruck im Melkbecher erzeugt, um ein im Innern des Melkbechers vorgesehenes Zitzengummi in eine pulsierende Melkbewegung zu versetzen.

Hierzu wird über eine Vakuumeinrichtung ein konstantes Vakuum in der Anlage erzeugt. Über entsprechende Steuereinrichtungen und Ventile wird ein pulsierender Unterdruck im Melkbecher unabhängig von dem konstanten Anlagenvakuum erzeugt. Hierbei sind regelmäßig das Druckniveau und/oder die Pulsdauer entsprechend den Erfordernissen und zum Anpassen an unterschiedliche Tierarten und -herden einstellbar. In der Entlastungsphase ist der Saugdruck nun annähernd null, wohingegen in der Unterdruckphase durch Öffnen des Ventils ein voreingestelltes Vakuum in den Melkbechern der Melkanlage erzeugt wird.

Nachteilig ist hierbei, daß der Aufbau des Vakuums von der Vakuumeinrichtung, z. B. einer Pumpe, durch die Unterdruckleitungen bis hin zu dem Melkbecher erfolgt, so daß diese Vakuum führenden Anlagenteile aufwendig aufeinander abgestimmt werden müssen. Dies ist erforderlich, um einen schlagartigen Anstieg des Unterdruckes in dem Melkbecher und damit eine schlagartige Belastung der Zitze und des Zitzengewebes zu vermeiden. Problematisch ist auch, daß es zu Schwingungen der Luftsäule innerhalb der vakuumführenden Anlagenteile kommen kann.

Die Aufgabe der vorliegenden Erfindung ist es, ein Verfahren und eine Vorrichtung zum Steuern und Überwachen einer Saugmelkanlage bereitzustellen, durch das bzw. die schlagartige Belastungen der Zitze weitgehend vermieden werden und dennoch hohe Melkerträge bei möglichst geringem konstruktiven und gerätetechnischen Aufwand möglich sind.

Diese Aufgabe wird mit der erfindungsgemäß durch ein Verfahren mit den Merkmalen des Anspruchs 1 bzw. eine Vorrichtung mit den Merkmalen des Anspruchs 6. Vorteilhafte Ausgestaltungen und Weiterbildungen sind Gegenstand der jeweiligen Unteransprüche.

Bei dem erfindungsgemäßen Verfahren zum Steuern und Überwachen einer Saugmelkanlage mit einem pulsierenden Unterdruck in einem Melkbecher eines Melkzeuges wird ein Pulsatorventil, das dem Erzeugen des Melkunterdruckes im Melkbecher dient, über ein Steuersignal angesteuert, wobei das Pulsatorventil mehrfach und kurzzeitig bei den Phasenübergängen zwischen den Saugphasen und Entlastungsphasen des Melkvorganges für einen kontinuierlichen Druckaufbau und/oder Druckabbau angesteuert wird.

Hierdurch können die Phasenübergänge im Druckverlauf gezielt beeinflußt, d. h. bezogen auf eine verbesserte Verträglichkeit bei einen gleichbleibend guten Melkertrag, variiert werden. Die auftretenden Probleme aufgrund von Schlagbewegungen beim Vakuumauf- bzw. Vakuumabbau können so gezielt und auf äußerst einfache Weise mittels dem Verfahren vermieden werden. Ein ohnehin vorhandenes Pulsatorventil wird durch kurzzeitiges Ansteuern mit dem Öffnungs- bzw. Schließungsimpuls dazu verwendet, den Druckverlauf hinsichtlich seiner Schlagwirkung in den Phasenübergängen verträglicher zu machen. Das Zitzengewebe wird somit durch den Melkvorgang weniger beansprucht, was der Gesundheit des Euters und des Tieres zugute kommt. Zudem müssen bei diesem Verfahren keine Nachteile im Melkertrag und in der Melkdauer, die ihrerseits für eine Effizienz des Melkverfahrens maßgebend ist, hingenommen werden.

Nach einer vorteilhaften Ausgestaltung des erfindungsgemäßen Verfahrens wird das Pulsatorventil beim Übergang von einer Entlastungsphase zu einer Saugphase kurzzeitig angesteuert, wodurch Schläge aufgrund des Druckaufbaus beim Melkvakuumbilden vermieden werden. Alternativ wird das Pulsatorventil bei dem Übergang von der Entlastungsphase zu der Saugphase und auch umgekehrt bei dem Übergang von der Saugphase zu der Entlastungsphase kurzzeitig mit einem Steuersignal angesteuert. Hierdurch werden in beiden Phasenübergängen des Melkvorganges Schläge aufgrund der Vakuumbildung abgefangen bzw. abgemildert, wodurch eine noch schonendere Milchentnahme möglich ist.

Nach einer weiteren vorteilhaften Ausgestaltung des Verfahrens werden die Anzahl und die Dauer der kurzen Steuerimpulse auf die Trägheit und die Volumina der Anlagenteile abgestimmt. Da jede Saugmelkanlage spezifische Volumina, je nach ihrer Größe und Ausstattung, aufweist bzw. unterschiedliche Charakteristiken hinsichtlich ihrer Trägheit bei dem Vakuumbildungsvorgang hat, kann auf diese Weise in allen Anlagen das erfindungsgemäße Verfahren vorteilhaft auf eine Stoßvermeidung abgestimmt ausgeführt werden. Es versteht sich von selbst, daß hierbei zwischen der Trägheit der Anlagenteile und ihren Volumina, welche bei der Vakuumbildung beteiligt sind, wie z. B. der Vakuumschlauch, die Vakuumpumpe, das Vakuumventil und der Zitzenbecher, die beide in einer Wechselwirkung stehen, bezogen auf ihre schlagauslösende Wirkung. Es ist deshalb von Vorteil, wenn alle diese Faktoren hinsichtlich auf ein schlagvermeidendes Melkverfahren abgestimmt sind.

Nach einer noch weiteren vorteilhaften Ausgestaltung des Verfahrens wird der Melkbecherunterdruck fortlaufend erfaßt Hierdurch können Rückschlüsse für ein Regeln des Druckverlaufes mit dem erfindungsgemäßen Verfahren auch während der Durchführung des Verfahrens gezogen werden, so daß auf eine Veränderung der Gegebenheiten oder einem nicht optimal eingestellten Druckverlauf jederzeit und auf einfache Weise reagiert werden kann.

Bei der Vorrichtung gemäß der Erfindung sind zum Erzeugen des pulsierenden Unterdruckes in dem Melkbecherinnenraum durch ein Pulsatorventil kurze aufeinanderfolgende Mehrfachbetätigungsimpulse durch eine Einheit so erzeugbar, daß der Melkbecherunterdruck in seinem Druckverlauf beim Übergang zwischen Saugphasen und Entlastungsphasen gezielt variiert werden kann. Hierdurch kann die Druckschwankung bei der Vakuumbildung mittels der Vakuumeinrichtung abgeschwächt und gedämpft werden, ohne daß ein erheblicher zusätzlicher Geräteaufwand nötig wäre und ohne daß Einbußen im Hinblick auf den Melkertrag hingenommen werden müssen. Durch die kurzen aufeinanderfolgenden Betätigungsimpulse am Ventil kann auf einfache Weise und unter Ausnutzung der physikalischen Gegebenheiten, wie der Trägheit der Vorrichtungsteile und der bei der Vakuumbildung beteiligten Volumina, wie z. B. dem Vakuumschlauch, das Pulsatorventil und der Vakuumpumpe, das Schlagverhalten aufgrund der Vakuumbildung gezielt auf sein größtmögliches Reduzieren beeinflußt werden. Zudem kann hierdurch der Druckverlauf im Melkbecher ohne größeren Einfluß auf die Pulsation selbst positiv beeinflußt. Indem lediglich sehr kurze Impulse kurz vor den Phasenübergängen mittels dem ohnehin vorhandenen Pulsationsventil ausführbar sind, wird hierdurch der eigentliche Unterdruck im Melkbecherinnenraum nicht schlagartig, sondern kontinuierlich oder nahezu kontinuierlich erhöht bzw. herabgesetzt. Negative Beeinträchtigungen der Zitze bzw. des Zitzengewebes werden somit vorteilhaft vermieden.

Vorteilhafterweise wird der Druckverlauf beim Öffnen und/oder beim Schließen des Ventils gezielt variiert werden. Hierdurch kann flexibel mit der Vorrichtung auf spezielle Gegebenheiten und Eigenarten von Tierherden oder Tierarten eingegangen werden, indem z. B. lediglich beim Druckaufbau mittels kurzen aufeinanderfolgenden Mehrfachbetätigungsimpulsen der Unterdruck im Melkbecher gedämpft, d. h. nicht schlagartig.aufgebaut wird.

Vorzugsweise wird der Druckanstieg und/oder der Druckabfall im Melkbecher kontinuierlich bezogen auf die Zeit veränderbar. Hierdurch kann, beispielsweise über eine variierende Druckintensität bzw. Pulsdauer der kurzen aufeinanderfolgenden Mehrfachbetätigungsimpulse, ein annähernd kontinuierlicher Verlauf im Druckaufbau bzw. -abbau im Innern des Melkbechers erzeugt werden. Die Möglichkeiten einer Optimierung des Melkvorganges, hinsichtlich der Verträglichkeit und des Ertrages sind somit um ein Vielfaches größer.

Nach einer vorteilhaften Ausgestaltung der Erfindung ist das Ventil ein elektrisch steuerbares Magnetventil und die Einheit elektrische Steuerimpulse zum Öffnen und Schließen des Ventils für die Erzeugung der Pulsation im Melkbecher liefert, die veränderbar sind. Mit einfachstem konstruktiven Aufbau können so erfindungsgemäß Kurzzeitimpulse zum Beeinflussen des Druckverlaufs wie auch der eigentlichen Saug- und Entlastungsimpulse erzeugt werden. Die Vorrichtung ist zudem kostengünstig herstellbar durch den geringen Geräteaufwand.

Nach einer weiteren vorteilhaften Ausgestaltung der Erfindung sind die Steuerimpulse in ihrer Zahl und in ihrer Zeitdauer einstellbar. Über die Zahl der Kurzzeitstromimpulse wird der Druckaufbau bzw. Druckabbau zeitlich in die Länge gezogen, wohingegen über die Zeitdauer der Kurzzeitimpulse, die verständlicherweise auch innerhalb eines Phasenübergangs variieren kann, die Steigung bzw. das Gefälle beim Phasenübergang im Pulsationsverlauf variierbar ist.

Nach einer noch weiteren vorteilhaften Ausgestaltung der Erfindung sind Anzeigemittel vorgesehen zum Anzeigen des Ventilöffnungsverlaufs und des Melkbecherunterdruckes über die Zeit, der Stromimpulsanzahl und/oder der Stromimpulsdauer. Hierdurch können eine Vielzahl von Parametern für ein gezieltes Einstellen des Melkvorgangs durch den Benutzer der Vorrichtung abgelesen und bei Bedarf verändert werden.

Nach einer weiteren vorteilhaften Ausgestaltung der Erfindung sind im Melkbecher Drucksensoren zum Messen des Unterdrucks vorgesehen. Dies hat den Vorteil, daß bei unterschiedlichen Druckintensitäten der Kurzzeitstromimpulse gegenüber dem eigentlichen Pulsationsdruck, das aktuelle Melkbechervakuum für ein Optimieren des Melkergebnisses kontinuierlich gemessen und entsprechend den Erfordernissen, wie beispielsweise einem schonenderen Melken, bei Bedarf verändert werden kann.

Nach einer weiteren vorteilhaften Ausgestaltung der Erfindung ist ein Mikroprozessor und eine Speichereinheit vorgesehen, in welchen herden- oder tierspezifische Programme für den Unterdruckverlauf im Melkbecher speicherbar sind. Hierdurch lassen sich auf einfache Weise eine Vielzahl von erfindungsgemäßen Einstellungsparametern bezüglich des Druckverlaufs abspeichern und bei Bedarf je nach Tierart oder Herdenart wieder abrufen. Die Bedienbarkeit der Vorrichtung wird auf diese Weise für einen Benutzer wesentlich vereinfacht.

Im folgenden wird die Erfindung unter Bezugnahme auf die Zeichnung im Detail beschrieben werden. Es zeigen:
- Fig. 1: ein Ausführungsbeispiel eines erfindungsgemäßen Druck- und Pulsationsverlaufes mit kurzen Steuerungsimpulsen nur beim Druckaufbau.
- Fig. 2: den zeitlichen Druck- und Pulsationsverlauf einer Saugmelkanlage nach dem Stand der Technik;

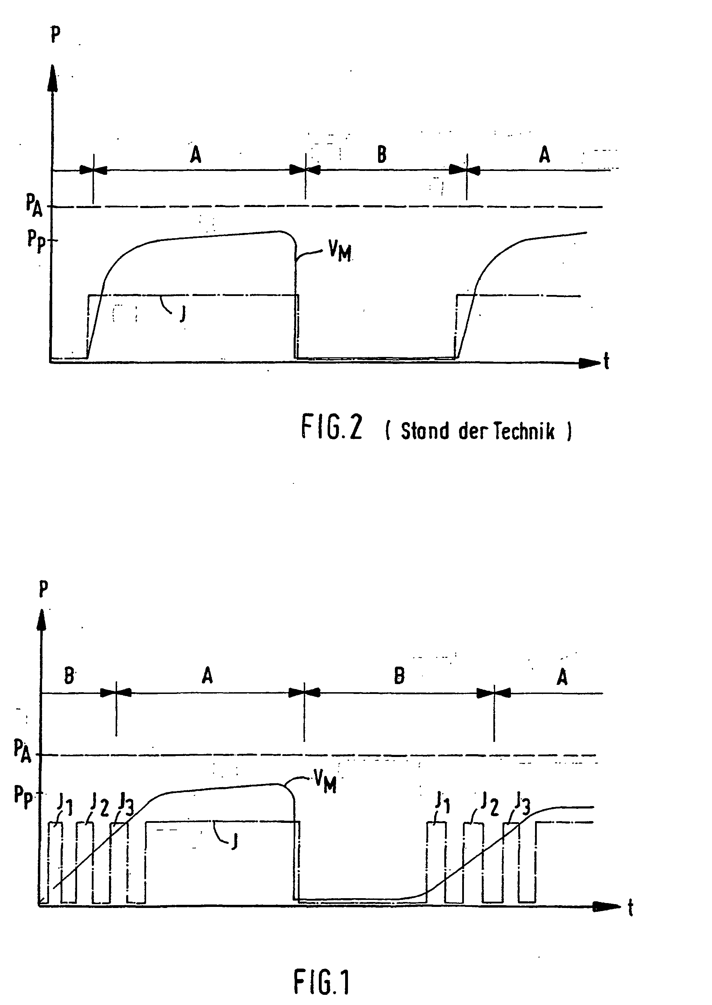

Fig. 1 veranschaulicht den Pulsations- und Druckverlauf eines Ausführungsbeispiels des erfindungsgemäßen Verfahrens, bei welchem während der Phasenübergänge gezielte und kurzzeitige Steuerimpulse I₁, I₂, I₃ während des Übergangs zwischen einer Entlastungsphase und einer Saugphase ausgeführt werden.

Aus der Fig. 2 ist ersichtlich, wie bisher im Stand der Technik das Vakuum in einem Melkbecher V_{M} über einen durch entsprechende Steuereinrichtungen erzeugten Steuerimpuls I aussieht. Die Vakuumeinrichtung einer solchen bekannten Saugmelkanlage besteht aus einer Vakuumpumpe, einem Vakuumventil, Druckverbindungsleitungen zu dem Melkbecher und einer Steuereinheit zum Erzeugen des Ventilsteuerimpulses I, d. h. des Ventilöfmungsimpulses und des Ventilschließungsimpulses. Die Vakuumpumpe der Anlage erzeugt hierbei einen konstanten Unterdruck P_{A}, welcher über dem eigentlichen Pulsationsdruck P_{P} liegt, um Sicherheitsreserven bei der Druckerzeugung und die Möglichkeit des Verändems des Pulsationsdruckes zu geben. In fest vorgegebenen Zeitabständen (Pulsen) wird von der Steuereinheit das Steuersignal I zum Öffnen des Ventils der Vakuumeinrichtung erzeugt, so daß im wesentlichen abrupt ein Unterdruck im Melkbecher erzeugt wird. Dieses Vakuum V_{M} wird über eine fest vorgegebene Zeitdauer (Pulsdauer) aufrechterhalten und ebenso wie beim Druckabbau abrupt nach dem Erhalten eines weiteren identischen Steuerimpulses I entlastet. In der voreingestellten Pulsationsperiode wird dieser Vorgang gleichmäßig wiederholt. Da der Druckaufbau und Druckabbau im wesentlichen abrupt erfolgt, d. h. unter Vernachlässigung von der Trägheit des Systems und der Größe von Anlagenteilen, die mit ihrem Volumen an der Vakuumbildung beteiligt sind, ist die Zitze entsprechend schlagbelastet.

Hierdurch kann der ansonsten schlagartig verlaufende Vakuumaufbau, des Melkbechervakuums V_{M} gezielt und beliebig abgeschwächt, d. h. bezogen auf Schlagbelastungen optimiert werden. Hierdurch wird das Gewebe einer Zitze nicht unnötig durch die Stoßbewegung belastet, weshalb der Melkvorgang schonender und auch hinsichtlich des Ertrages optimiert ausführbar ist. Bei dem in Fig. 2 dargestellten Ausführungsbeispiel werden drei Kurzzeitsteuerimpulse I₁, I₂, I₃ beim Überleiten von einer Entlastungsphase zu einer Saugphase vor dem eigentlichen Ventilsteuerimpuls I ausgeführt, weshalb der Druckaufbau flacher im Zeitablauf verläuft. Bei diesem Ausführungsbeispiel ist der Druckabbau nicht auf diese Weise gedämpft, was jedoch selbstverständlich nicht als Einschränkung der Erfindung anzusehen ist, sondern lediglich als ein mögliches Ausiuhrungsbeispiel von vielen anderen anzusehen ist. Selbstverständlich kann ebenso der Druckabbau über Kurzzeitimpulse im Verlauf kontinuierlicher gemacht werden. Auch die Anzahl der Steuerimpulse Iᵢ ist selbstverständlich variabel, wie auch die Druckintensität d.h. der Druckanstieg pro Zeit, welche hier bei diesem Beispiel gleich der Intensität in der Saugdruckphase ist, jedoch auch progressiv ansteigen kann oder degressiv abfallen kann. Hierbei wird deutlich, mit welcher großen Variabilität in den Melkparametern das erfindungsgemäße Verfahren hinsichtlich eines optimierten Melkergebnisses und eines den Euter und das Eutergewebe schonenden Melkvorganges durchgeführt werden kann.

## Patentansprüche

1. Verfahren zum Steuern und Überwachen einer Saugmelkanlage, bei welcher ein pulsierender Unterdruck mit abwechselnd aufeinanderfolgenden Saugphasen (A) und Entlastungsphasen (B) in einem Melkbecher eines Melkzeuges über ein Pulsatorventil erzeugt werden, wobei das Pulsatorventil über ein Steuersignal angesteuert wird, **gekennzeichnet durch** mehrfaches kurzzeitiges Ansteuern des Pulsatorventils bei den Phasenübergängen zum kontinuierlichen Druckaufbau und/oder Druckabbau.

2. Verfahren nach Anspruch 1, **gekennzeichnet durch** mehrfaches kurzzeitiges Ansteuern beim Übergang von der Entlastungsphase (B) zu der Saugphase (A).

3. Verfahren nach Anspruch 1, **gekennzeichnet durch** mehrfaches kurzzeitiges Ansteuern beim Übergang von der Entlastungsphase (B) zu der Saugphase (A) und umgekehrt.

4. Verfahren nach Anspruch 1, 2 oder 3, **gekennzeichnet durch** abstimmen der Anzahl und Dauer der kurzen Steuerimpulse auf die Trägheit und Volumina der Anlagenteile.

5. Verfahren nach einem der Ansprüche 1 bis 4, **gekennzeichnet durch** fortlaufendes Erfassen des Melkbecherunterdruckes.

6. Vorrichtung zum Steuern und Überwachen einer Saugmelkanlage, mit einer Vakuumeinrichtung, welche eine Vakuumpumpe und ein Pulsatorventil aufweist, wobei ein pulsierender Unterdruck mit abwechselnd aufeinanderfolgenden Saugphasen A und Entlastungsphasen B in einem Melkbecher eines Melkzeuges über das Pulsatorventil erzeugt wird, **gekennzeichnet durch** eine Einheit zum Öffnen und/oder Schließen des Ventils, **durch** kurze aufeinanderfolgende Mehrfachbetätigungsimpulse derart erzeugbar sind, daß der Melkbecherunterdruck in seinem Druckverlauf beim Übergang zwischen Saugphasen (A) und Entlastungsphasen (B) gezielt variiert werden kann.

7. Vorrichtung nach Anspruch 6, **dadurch gekennzeichnet, daß** das Ventil ein elektrisch steuerbares Magnetventil ist und die Einheit elektrische Steuerimpulse zum Öffnen und Schließen des Ventils liefert, die veränderbar sind.

8. Vorrichtung nach Anspruch 7, **dadurch gekennzeichnet, daß** die Steuerimpulse in ihrer Zahl und Zeitdauer einstellbar sind.

9. Vorrichtung nach Anspruch 6, 7 oder 8, **dadurch gekennzeichnet, daß** Anzeigemittel vorgesehen sind zum Anzeigen des Ventilöffnungsverlaufs und des Melkbecherunterdruckes über die Zeit, der Steuerimpulsanzahl und/oder der Steuerimpulsdauer.

10. Vorrichtung nach einem der vorherigen Ansprüche 6 bis 9, **gekennzeichnet durch** Drucksensoren zum Messen des Unterdruckes im Melkbecher.

11. Vorrichtung nach einem der vorherigen Ansprüche 6 bis 10, **dadurch gekennzeichnet, daß** ein Mikroprozessor und eine Speichereinheit vorgesehen sind, in welchen herden- oder tierspezifische Programme für den Druckverlauf im Melkbecher speicherbar sind.

12. Vorrichtung nach einem der vorherigen Ansprüche 6 bis 11, **dadurch gekennzeichnet, daß** zum Steuern des Ventils eine Puls-Weiten-Modulation (PWM) dient.

## Claims

1. Method for controlling and monitoring a sucking milking installation, in which a pulsating subpressure with suction phases (A) and release phases (B), alternately succeeding one another, is generated in a teat cup of a milking pail by means of a pulse valve, wherein the pulse valve is piloted by means of a control signal, **characterized by** piloting repeatedly the pulse valve for a short time during the phase transitions for continuous pressure build-up and/or pressure release.

2. Method according to claim 1, **characterized by** repeated short-time piloting action during transition from the release phase (B) to the suction phase (A).

3. Method according to claim 1, **characterized by** repeated short-time piloting action during transition from the release phase (B) to the suction phase (A) and vice versa.

4. Method according to claim 1, 2 or 3, **characterized by** adjusting the number and duration of the short control pulses to the inertness and volumes of the installation parts.

5. Method according to one of claims 1 to 4, **characterized by** continuously detecting the subpressure of the teat cup.

6. Device for controlling and monitoring a sucking milking installation comprising a vacuum apparatus, which has a vacuum pump and a pulse valve, a pulsating subpressure with suction phases (A) and release phases (B) alternately succeeding one another being generated in a teat cup of a milking pail by means of the pulse valve, **characterized by** a unit for opening and/or closing the valve by means of which multiple actuating impulses can be generated such that the subpressure of the teat cup as to its pressure progression is variable selectively during the transition between the suction phases (A) and release phases (B).

7. Device according to claim 6, **characterized in that** the valve is an electrically controllable magnetic valve and the unit provides electrical control pulses, which can be modified for opening and closing the valve.

8. Device according to claim 7, **characterized in that** the control pulses are adjustable as to their number and time duration.

9. Device according to claim 6, 7 or 8, **characterized in that** there are provided display means for displaying the valve opening progression and the subpressure of the teat cup as a function of time, the number of control pulses and/or the control impulse duration.

10. Device according to one of the preceding claims 6 to 9, **characterized by** pressure sensors for measuring the subpressure in the teat cup.

11. Device according to one of the preceding claims 6 to 10, **characterized in that** there is provided a microprocessor and a memory unit, in which programs specific to the herd and to the animal for the pressure progression in the teat cup can be memorized.

12. Device according to one of the preceding claims 6 to 11, **characterized in that** a pulse width modulation (PWM) serves for controlling the valve.

## Revendications

1. Procédé de commande et de contrôle d'une installation de traite à succion, dans le cas de laquelle une dépression pulsative avec des phases de succion (A) et des phases de décharge (B) se succédant à tour de rôle est engendrée dans un gobelet trayeur d'une garniture de traite par une vanne pulsatrice, la vanne pulsatrice étant pilotée par un signal de commande, **caractérisé par** le pilotage répété de courte durée de la vanne pulsatrice durant les transitions de phase pour établir continuellement une pression et/ou une décompression.

2. Procédé selon la revendication 1, **caractérisé par** une action de pilotage répétée de courte durée durant la transition de la phase de décharge (B) à la phase de succion (A).

3. Procédé selon la revendication 1, **caractérisé par** une action de pilotage répétée de courte durée durant la transition de la phase de décharge (B) à la phase de succion (A) et vice versa.

4. Procédé selon la revendication 1, 2 ou 3, **caractérisé par** l'accord du nombre et de la durée des impulsions de commande courtes à l'inertie et aux volumes des pièces de l'installation.

5. Procédé selon l'une des revendications 1 à 4, **caractérisé par** une détection continue de la dépression du gobelet trayeur.

6. Dispositif de commande et de contrôle d'une installation de traite à succion, avec une installation à vide qui a une pompe à vide et une vanne pulsatrice, une dépression pulsative avec des phases de succion (A) et des phases de décharge (B) se succédant à tour de rôle étant engendrée dans un gobelet trayeur d'une garniture de traite par la vanne pulsatrice, **caractérisé par** une unité pour ouvrir et/ou pour fermer la vanne au moyen de laquelle des impulsions d'actionnement répétées courtes se succédant peuvent être engendrées de manière telle que la dépression du gobelet trayeur quant à son allure de pression peut être variée directement durant la transition entre les phases de succion (A) et les phases de décharge (B).

7. Dispositif selon la revendication 6, **caractérisé en ce que** la vanne est une vanne magnétique pouvant être commandée électriquement et l'unité fournit des pulsations de commande électriques qui sont modifiables pour ouvrir et pour fermer la vanne.

8. Dispositif selon la revendication 7, **caractérisé en ce que** les impulsions de commande sont ajustables quant à leur nombre et leur durée.

9. Dispositif selon la revendication 6, 7 ou 8, **caractérisé en ce que** des moyens d'indication sont prévus pour indiquer l'allure de l'ouverture de la vanne et la dépression du gobelet trayeur en fonction du temps, le nombre des impulsions de commande et/ou la durée des impulsions de commande.

10. Dispositif selon l'une des revendications précédentes 6 à 9, **caractérisé par** des capteurs de pression pour mesurer la dépression dans le gobelet trayeur.

11. Dispositif selon l'une des revendications précédentes 6 à 10, **caractérisé en ce qu'**un microprocesseur et une unité de mémoire sont prévus, dans laquelle des programmes spécifiques aux troupeaux ou aux animaux peuvent être mémorisés pour l'allure de la pression dans le gobelet trayeur.

12. Dispositif selon l'une des revendications précédentes 6 à 11, **caractérisé en ce qu'**une modulation de largeur d'impulsion (PWM : Pulse Width Modulation) sert à commander la vanne.
